# EUROPEAN PATENT APPLICATION

(11) **EP 4 406 927 A1**
(43) Date of publication of application: **31.07.2024**
(21) Application number: 23460036.9
(22) Date of filing: 31.10.2023
(51) Int. Cl.: C04B 35/56, C04B 35/626

(54) **METHOD FOR MANUFACTURING OF TERNARY CARBIDES**

(30) Priority: 30.01.2023 PL 44363823
(71) Applicant: Siec Badawcza Lukasiewicz - Poznanski Instytut Technologiczny, 61-755 Poznan (PL)
(72) Inventor: Garbiec, Dariusz, 61-637 Poznan (PL); Wisniewski, Jakub, 61-289 Poznan (PL); Pólrolniczak, Joanna, 62-050 Mosina (PL); Marczewski, Mateusz, 61-152 Poznan (PL); Kubicki, Grzegorz, 61-003 Poznan (PL)
(74) Representative: Luczak, Jerzy

(57) **Abstract**

The subject of the application is a method for manufacturing of ternary carbides, with a general formula of MₙAXₙ₋₁, where the symbol M means a transition metal, A means an element from group 13 or 14, and X means carbon, with the manufactured carbides finding use in particular in space industry, as well as aviation or automotive industry.

A method for manufacturing of ternary carbides according to the invention is characterized by the synthesis process being conducted using powdered materials, component M, advantageously chrome Cr or titanium Ti, component A, advantageously Al, and component X, advantageously carbon C, which powder materials of components M:A:X are weighed in one of the possible mass rations: 2:1:1 or 3:1:2, whereas advantageously in the reaction in parallel overstoichiometry of component A is used, amounting to 5% to 30%, most advantageously 10% or 20% and/or substoichiometry of component X amounting from 5% to 30%, advantageously 10%, where first individual powder components are milled in a planetary mill in a shielding gas atmosphere, advantageously argon atmosphere, at a milling speed in the range of 200 to 500 RPM, advantageously 300 RPM, where the milling time is in the range of 2 to 30 hours, advantageously 12 hours, and afterwards the material is placed in graphite sintering tools, which are assembled in a manner which does not cause pressure on the sintered powder material, and thereafter the material is sintered with the use of spark plasma sintering device, in which the sintering process is performed at a heating rate in the range of 50°C/min to 600°C/min, advantageously 100°C/min to a temperature in the range of 900°C to 1400°C, most advantageously to a temperature in the range of 1050°C to 1100°C, whereas after obtaining the target temperature, the material keeps being heated over a time of 1 to 40 minutes, most advantageously in the over a time from 15 minutes to 30 minutes, and then is cooled inside the sintering tools to a temperature in the range of 20°C to 40°C, advantageously 25°C.

## Description

The subject of the application is a method for manufacturing of ternary carbides, with a general formula of MₙAXₙ₋₁, where the symbol M means a transition metal, A means an element from group 13 or 14, and X means carbon, with the manufactured carbides finding use in particular in space industry, as well as aviation or automotive industry.

Ternary carbides are manufactured in the form of a powder material using Spark Plasma Sintering (SPS) technology, whereas there are known methods of manufacturing of MAX phases using powder metallurgy, including hot pressing, e.g., like described in the patent document WO2016202892A1. The known solutions include also such solutions where the element A is not Al or Si, but for example Ga or Ge (this solution was described in the patent application EP2944624A1) or Zn, which was disclosed in the patent description EP3778479B1. There are also known methods of obtaining the MAX phase with a larger number of M elements at a molar ratio of 4:1:3, which was presented in the description of patent application CN110698204A or at a molar ratio of 2:1:1, which was disclosed in the patent document CN113185295A. Powders being a part of the available solutions may be also obtained using a molten salt method, like described in patent descriptions CN107935596B and CN108821291B.

There are also known attempts in state-of-the art to manufacture MAX phases using a pressureless spark plasma sintering (PSPS) method with a modified tool design. [Ge Mengni, Wang, Xiaofan Li, Gaiye, Lu, Chen, Zhang, Jianfeng, Tu, Rong. (2019). Synthesis of Cr2AlC from Elemental Powders with Modified Pressureless Spark Plasma Sintering. Journal of Wuhan University of Technology-Mater. Sci. Ed. 34. 287-292]. However, this method was only used to manufacture only a Cr₂AlC phase, without the use of another transition metal M and a main group metal A, without crushing of the sintered product into powder, as well as without previous preparation of powder using a mechanical synthesis method, which enables the introduction of additional defects, breaking-up of the structure and a cold sintering effect, which translates into the need of using a higher synthesis temperature, leading to a higher energy consumption and increased costs of the process.

The goal of the invention is to establish a method for the manufacturing of ternary carbides which would enable the manufacturing of ternary carbides with high purity, at optimally selected economic and time parameters.

The field of the invention, which is a method for the manufacturing of ternary carbides with a general formula of MₙAXₙ₋₁, where the symbol M means a transition metal, A means an element from group 13 or 14, and X means carbon, manufactured in the form of a powder material using a combined technologies of ball milling and spark plasma sintering, consists of the synthesis process being conducted with the use of powder materials, component M, advantageously chrome Cr or titanium Ti, component A, advantageously Al, and component X, advantageously carbon C, which powder materials of components M:A:X are weighed in one of the possible mass ratios: 2:1:1 or 3:1:2, whereas advantageously in the reaction in parallel overstoichiometry of component A is used, amounting to 5% to 30%, most advantageously 10% or 20% and/or substoichiometry of component X amounting from 5 to 30%, advantageously 10%, where first individual powder components are milled in a planetary mill in a shielding gas atmosphere, advantageously argon atmosphere, at a rotational speed in the range of 200 to 500 RPM, advantageously 300 RPM, where the milling time is in the range of 2 to 30 hours, advantageously 12 hours, and afterwards the material is placed in a graphite sintering tools, which are assembled in a manner which does not cause pressure on the powder material, and thereafter the material is sintered with the use of spark plasma sintering device, in which the sintering process is performed at a heating rate in the range of 50°C/min to 600°C/min, advantageously 100°C/min to a temperature in the range of 900°C to 1400°C, most advantageously to a temperature in the range of 1050°C to 1100°C, whereas after obtaining the target temperature, the material keeps being heated over a time of 1 to 40 minutes, most advantageously over a time from 15 minutes to 30 minutes, and then is cooled inside the sintering tools to a temperature in the range of 20°C to 40°C, advantageously 25°C.

The use of the presented invention enables the following technical and economic effects:
- the reduction of the amount of phases which contaminate the product of the synthesis (<10%),
- the ability to perform the process at a lower temperature and in a shorter time of synthesis compared to alternative manufacturing processes,
- the ability to manufacture the material in a semi-industrial scale,
- high control and repeatability of the process,
- the increase of the durability of sintering tools,
- the reduction of the manufacturing costs by optimising the production process, enabling the use of only cheap basic materials.

In an example, but not limiting implementation of the invention, conducting a synthesis of ternary carbides with a general formula of MₙAXₙ₋₁, where the symbol M means a transition metal (e.g., chromium, titanium) A means an element from group 13 or 14 (e.g., aluminium), whereas X is carbon, consists of conducting synthesis using powder materials M, A and X, which are weighed in one of possible mass ratios:
a) 2:1:1
b) 3:1:2

In a reaction in parallel overstoichiometry of component A is used, amounting to 5% to 30%, and/or substoichiometry of component X amounting from 5 to 30%.

The first stage of production of ternary carbides is the process of milling the powder components, which is conducted in a planetary mill in a protective atmosphere. The milling speed is in the range of 200 to 500 RPM, the milling time is in the range of 2 to 30 hours.

The pressureless sintering process is conducted in the time from 1 to 40 minutes, in the temperature range from 900°C to 1400°C in a protective atmosphere without applied pressure. The sintered material is broken up into a powder form using a mortar.

### Example implementations:

### Ternary carbide Cr₂AlC

In order to produce a ternary carbide Cr₂AlC with a method according to the invention, first a powder material is weighed according to a 2:1:1 stoichiometry with a 10% stoichiometric excess of the component A (2:1.1:1), in the following amounts:
- component M - chrome - 28.03 g
- component A - aluminium - 8.73 g
- component X - carbon - 3.24 g

Individual components are milled using a planetary mill (Pulverisette 5 Premium Line, Fritsch GmbH) in an atmosphere of argon as a protective gas with a speed of 200 RPM and the milling time of 12 hours.

The milled material is placed in graphite sintering tools, which are assembled in a manner which does not exert any pressure on the powder material. Further on, the material is sintered using a spark plasma sintering device (HP D 25, FCT Systeme GmbH) with a heating rate of 100°C/min to a temperature of 1 100°C, after reaching this temperature the material keeps being heated over a time of 30 minutes, and then cooled inside the tools to a temperature of 25°C.

As a result of the conducted process material in the form of loosely compacted scaffold consisting of ternary carbide Cr₂AlC was produced, which was later broken up using a mortar to the form of a powder. The obtained powder material was subjected to structural examination, which demonstrated that it consists of at least 93% of Cr₂AlC carbide. The structural examination has demonstrated a low share of contamination phases <7%. The results of the examination are shown on the diffractogram below.

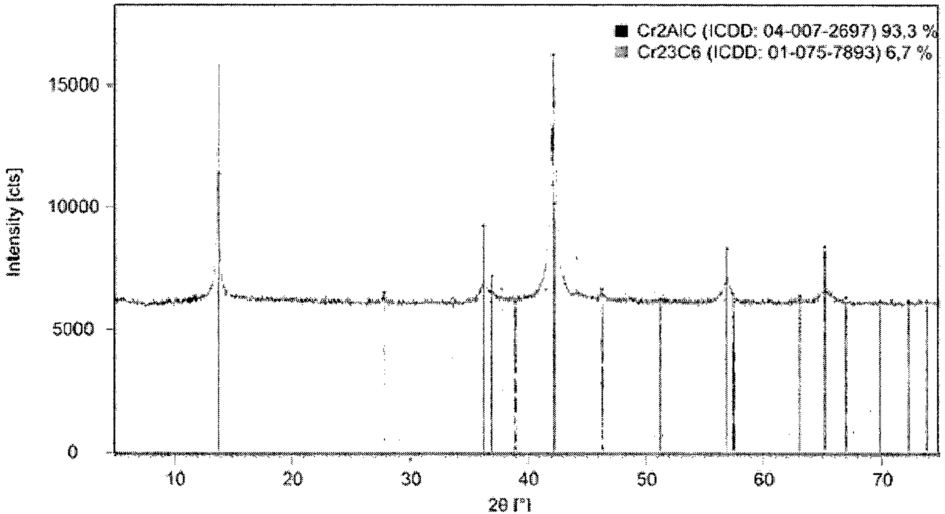

### Ternary carbide Ti₃AlC₂

In order to produce a ternary carbide Ti₃AlC₂ with a method according to the invention, first a powder material is weighed according to a 3:1:1 stoichiometry with a 20% stoichiometric excess of the component A and a 10% stoichiometric deficiency of the component X (3:1.2:1.8), that is, in the following amounts:
- component M - titanium - 29.07 g
- component A - aluminium - 6.55 g
- component X - carbon - 4.38 g

Individual components are milled using a planetary mill (Pulverisette 5 Classic Line, Fritsch GmbH), with the process conducted in an atmosphere of protective gas (argon) with a speed of 300 RPM for a time equal to 12 hours.

The milled material is placed in graphite sintering tools, which are assembled in a manner which does not exert any pressure on the sintered powder material. Further on, the material is sintered using a spark plasma sintering device (HP D 25, FCT Systeme GmbH) with a heating rate of 300°C/min to a temperature of 1050°C, after reaching this temperature the material keeps being heated over a time of 15 minutes, and then cooled inside the tools to a temperature of 25°C.

The sintered material obtained in this manner was broken up using a mortar into the form of a powder. The obtained material was subjected to structural examination, which demonstrated that it consists in at least 95% of Ti₃AlC₂ carbide. The structural examination has demonstrated a low share of contamination phases <5%. The results of the examination are shown on the diffractogram below.

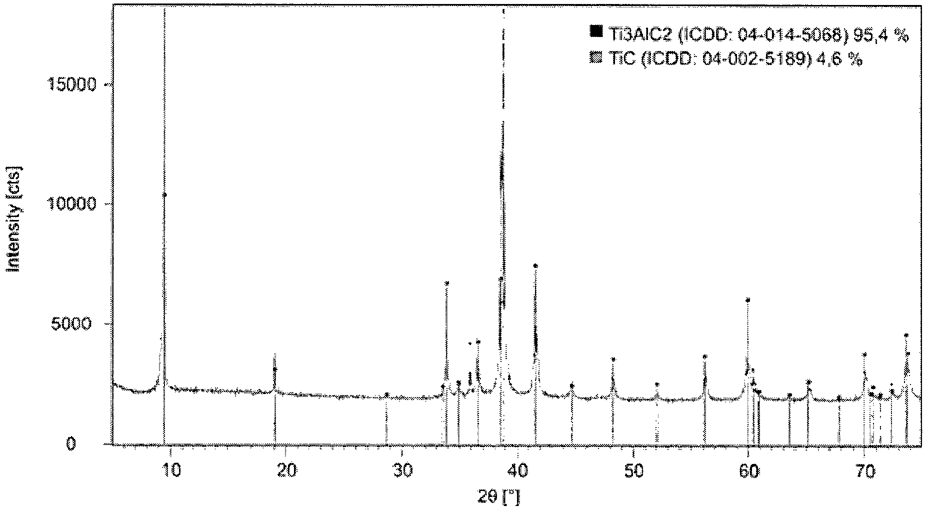

## Claims

1. method for the manufacturing of ternary carbides with a general formula of MₙAXₙ₋₁, where the symbol M means a transition metal, A means an element from group 13 or 14, and X means carbon, manufactured in the form of a powder material using a combined technologies of ball milling and spark plasma sintering, **characterised in that** the synthesis process is conducted with the use of powder materials, component M, advantageously chrome Cr or titanium Ti, component A, advantageously Al, and component X, advantageously carbon C, which powder materials of components M:A:X are weighed in one of the possible mass ratios: 2:1:1 or 3:1:2, whereas advantageously in the reaction in parallel overstoichiometry of component A is used, amounting to 5% to 30%, most advantageously 10% or 20% and/or substoichiometry of component X amounting from 5% to 30%, advantageously 10%, where first individual powder components are milled in a planetary mill in a shielding gas atmosphere, advantageously argon atmosphere, at a rotation speed in the range of 200 to 500 RPM, advantageously 300 RPM, where the milling time is in the range of 2 to 30 hours, advantageously 12 hours, and afterwards the material is placed in graphite sintering tools, which are assembled in a manner which does not cause pressure on the powder material, and thereafter the material is sintered with the use of spark plasma sintering device, in which the sintering process is performed at a heating rate in the range of 50°C/min to 600°C/min, advantageously 100°C/min to a temperature in the range of 900°C to 1400°C, most advantageously to a temperature in the range of 1050°C to 1100°C, whereas after obtaining the target temperature, the material keeps being heated over a time of 1 to 40 minutes, most advantageously in the over a time from 15 minutes to 30 minutes, and then is inside the sintering tools to a temperature in the range of 20°C to 40°C, advantageously 25°C.
